# FASCICULE DE BREVET EUROPEEN

(11) **EP 2 709 793 B1**
(45) Date de publication et mention de la délivrance du brevet: **30.03.2016**
(21) Numéro de dépôt: 12722472.3
(22) Date de dépôt: 25.04.2012
(51) Int. Cl.: B23K 26/38, B23K 26/14

(54) **BUSE LASER À ÉLÉMENT MOBILE**
LASERDÜSE MIT EINEM BEWEGLICHEN ELEMENT
LASER NOZZLE HAVING A MOVABLE PIECE

(30) Priorité: 16.05.2011 FR 1154224
(43) Date de publication de la demande: 26.03.2014
(73) Titulaire: L'Air Liquide Société Anonyme pour l'Etude et l'Exploitation des Procédés Georges Claude, 75007 Paris (FR)
(72) Inventeur: JOUANNEAU, Thomas, F-38000 Grenoble (FR); DEBECKER, Isabelle, F-75017 Paris (FR); LEFEBVRE, Philippe, F-78250 Meulan (FR)
(74) Mandataire: Pittis, Olivier
(86) Numéro de dépôt international: PCT/FR2012/050907
(87) Numéro de publication internationale: WO 2012/156608

(56) Documents cités:
- JP-A- 63 040 695
- JP-A- 63 108 992
- JP-B2- 3 412 768
- US-A- 4 031 351

## Description

L'invention concerne une buse laser utilisable en coupage par faisceau laser avec élément mobile interne comprenant une jupe permettant de concentrer le gaz de coupe dans la saignée de coupe. Ce type de base est connu du document JP63040695.

Le coupage par faisceau laser nécessite l'utilisation d'une buse généralement en cuivre ayant pour effet de canaliser le gaz et laisser passer le faisceau laser.

Les buses ont typiquement des diamètres de leur orifice de sortie compris entre 0.5 et 3 mm pour une distance de travail comprise entre 0,6 et 2 mm.

Afin de permettre la découpe, il est nécessaire d'utiliser des pressions élevées, en général de plusieurs bar, dans la tête de focalisation afin de permettre au gaz de rentrer dans la saignée pour chasser le métal en fusion.

Or, une grande partie du gaz utilisée, typiquement entre 50 et 90%, n'a aucune action sur le processus de découpe, c'est-à-dire sur l'expulsion du métal en fusion, car elle part sur les cotés de la saignée de coupe.

Ces pertes de gaz sont en fait dues à l'énorme différence entre la section de passage de l'orifice de buse et la taille de la tâche focale. Ainsi, à titre indicatif, la section de passage d'une buse avec orifice de sortie de diamètre égal à 1.5 mm est 25 fois plus importante que la section de la tache focale créée par le faisceau laser traversant cette buse.

Or, si une proportion insuffisante de gaz est mise en oeuvre, on assiste alors à l'apparition de défauts de coupe, en particulier des bavures adhérentes et/ou des traces d'oxydation.

Tenter d'y remédier en réduisant le diamètre de l'orifice de la buse n'est pas idéal car on prend alors le risque de voir le faisceau laser venir frapper l'intérieur de la buse et la détériorer, ce qui par ailleurs détériore également la qualité de coupe et/ou les performances.

Il existe par ailleurs un certain nombre de documents proposant diverses solutions pour tenter de favoriser l'entrée du gaz dans la saignée, par exemple EP-A-1669159, JP-A-62006790, JP-A-61037393, JP-A-63108992, JP-A-63040695 et US-A-4,031,351.

Or, aucune de ces solutions n'est vraiment idéale car souvent d'architecture complexe à mettre en oeuvre, d'encombrement supérieur à celui d'une buse classique, et/ou présentant une efficacité limitée. En outre, les solutions existantes ne sont pas adaptées à un usage en découpe laser industrielle.

Notamment, le document US-A-4,031,351 divulgue une buse de coupage laser comprenant un élément mobile dont l'extrémité est plaquée contre la surface de la pièce à découper pour favoriser l'injection du gaz de coupe dans la saignée. Pour ce faire, la buse est munie d'un ressort exerçant une pression sur l'élément mobile pour le déplacer en direction de la pièce à couper et le maintenir contre la surface de la dite pièce.

Cependant, cette solution pose plusieurs problèmes majeurs, notamment dans le cadre d'un usage industriel.

D'une part, la force exercée par le ressort, cumulée à la pression du gaz de coupe, conduit l'élément mobile à exercer un effort important sur la pièce à couper. Il s'ensuit un risque de déformation de la tôle dans laquelle la pièce est découpée, de frottement et de rayures sur la surface de la tôle, voire d'entraînement, i. e. de déplacement, de la tôle, qui est en général simplement posée sur la table de la machine industrielle de découpe. Ces risques sont d'autant plus importants que la tôle est fine.

La présence d'un joint torique entre l'extrémité de l'élément mobile et la surface de la pièce contribue encore à augmenter les forces de frottement sur la tôle et pose problème en termes de durée de vie de l'élément mobile, du fait des très fortes températures rencontrées à ce niveau de la buse, où le faisceau laser présente sa densité de puissance la plus forte et où les risques de projection de métal fondu sont importants.

Enfin, cette solution pose aussi problème lors des phases de déplacements rapides de la tête de découpe au-dessus de la tôle, sans gaz de coupe ni faisceau délivré, notamment dans le cadre de découpes de pièces en imbrication, ou lors des phases de perçage de la tôle qui génèrent des projections importantes de métal fondu. Dans ces situations, un contact permanent de la buse avec la tôle est donc à proscrire.

Le problème qui se pose est dès lors de pouvoir améliorer l'efficacité du gaz utilisé en coupage laser en augmentant la proportion de gaz ayant une action sur l'expulsion du métal en fusion et par conséquent de diminuer la quantité globale de gaz utilisée et la pression de gaz nécessaire tout en limitant la proportion de gaz perdu, et ceci en proposant une solution qui puisse être mise en oeuvre au plan industriel et n'engendre pas de complexification excessive du dispositif de coupage laser.

La solution de la présente invention est une buse laser comprenant :
- un corps de buse comprenant un logement axial traversant axialement ledit corps de buse et comprenant un premier orifice de sortie situé au niveau de la face avant du corps de buse, et
- un élément mobile comprenant une partie avant formant jupe, agencé dans le logement axial du corps de buse, ledit élément mobile étant mobile en translation dans le logement axial du corps de buse et comprenant un passage axial avec un deuxième orifice de sortie (12) débouchant au niveau de la partie avant formant jupe, caractérisée en ce que :
- l'élément mobile est apte à se déplacer en translation dans le logement axial en direction du premier orifice de sortie sous l'effet d'une pression gazeuse s'exerçant sur l'élément mobile jusqu'à ce que la partie avant formant jupe de l'élément mobile vienne faire saillie à l'extérieur du logement axial au travers du premier orifice de sortie de la face avant du corps de buse, et
- un élément élastique est agencé dans le logement axial, entre le corps de buse et l'élément mobile, ledit élément élastique exerçant une force de rappel élastique sur l'élément mobile tendant à s'opposer au mouvement de translation dans le logement axial en direction du premier orifice de sortie.

Selon le cas, la buse de l'invention peut comprendre l'une ou plusieurs des caractéristiques techniques suivantes :
- lorsque l'élément mobile se déplace en translation dans le logement axial en direction du premier orifice de sortie situé au niveau de la face avant du corps de buse, la partie avant formant jupe de l'élément mobile fait saillie à l'extérieur du logement axial au travers du premier orifice de sortie de la face avant du corps de buse.
- le fond du logement axial du corps de buse comprend un épaulement, et la paroi périphérique de l'élément mobile comprend une butée, l'élément élastique étant positionné entre l'épaulement et la butée.
- au moins un élément d'étanchéité est agencé entre le corps de buse et l'élément mobile, par exemple un ou plusieurs joints toriques.
- ledit au moins un élément d'étanchéité est agencé dans une gorge périphérique aménagée dans la paroi périphérique externe de l'élément mobile.
- l'élément mobile est apte à se déplacer entre plusieurs positions comprenant :
   - une position de repos dans laquelle la jupe de la partie avant est totalement ou quasi-totalement rentrée dans le logement axial du corps de buse, et
   - une position de travail dans laquelle la jupe de la partie avant fait totalement ou quasi-totalement saillie à l'extérieur du logement axial du corps de buse, au travers du premier orifice de sortie.
      - le passage axial de l'élément mobile a un profil de forme conique, tronconique ou convergente/divergente.
      - le corps de buse est en un matériau conducteur électriquement, en particulier cuivre, laiton ou analogue.
      - l'élément mobile est formé en tout ou en partie d'un matériau isolant électriquement.
      - de manière alternative, un élément mobile est en en un matériau conducteur électriquement et résistant à la température/chaleur, en particulier cuivre, laiton ou analogue, ledit élément isolant comprenant au moins une interface isolante agencée entre la buse et la paroi de l'insert mobile. L'interface isolante est soit un manchon agencé dans le corps de buse, soit un revêtement isolant porté par le corps de buse ou l'élément mobile.

L'invention porte également sur une tête de focalisation laser comprenant au moins une optique de focalisation, par exemple une ou plusieurs lentilles ou miroirs, notamment une lentille de focalisation et une lentille de collimation, caractérisée en ce qu'elle comporte en outre une buse laser selon l'invention.

Par ailleurs, l'invention concerne aussi une installation laser comprenant un générateur laser, une tête de focalisation laser et un dispositif de convoyage de faisceau laser relié audit générateur laser et à ladite tête de focalisation laser, caractérisée en ce que la tête de focalisation laser est selon l'invention.

De préférence, le générateur ou source laser est de type CO₂, YAG, à fibres ou à disques, de préférence à fibres ou à disques, notamment une source laser à fibres d'ytterbium.

Selon encore un autre aspect, l'invention a également trait à un procédé de coupage par faisceau laser, dans lequel on met en oeuvre une buse selon l'invention, une tête de focalisation laser selon l'invention ou une installation selon l'invention.

L'invention va maintenant être mieux comprise grâce à la description suivante faite en références aux Figures annexées parmi lesquelles :
- la Figure 1A schématise une tête de focalisation d'une installation de coupage laser classique,
- la Figure 1B schématise la taille du spot laser par rapport à la taille de l'orifice de buse,
- la Figure 2 est un schéma en coupe du corps d'une buse selon l'invention,
- la Figure 3 est un schéma en coupe d'une buse selon l'invention,
- les Figures 4A et 4B montrent la buse de l'invention avec l'élément mobile dans deux positions différentes.

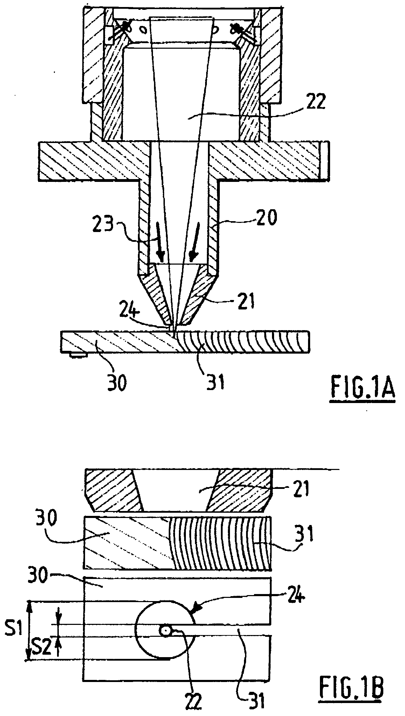

La Figure 1A représente la tête de focalisation 20 d'une installation de coupage laser classique, auquel est fixée une buse laser 21 classique qui est traversée par un faisceau laser focalisé et par du gaz d'assistance (flèche 23) servant à expulser le métal fondu par le faisceau hors de la saignée 31 de coupe formée par le faisceau 22 dans la pièce métallique à couper 30, par exemple une tôle en acier ou en acier inoxydable.

Le gaz d'assistance peut être un gaz actif, tel de l'oxygène, de l'air, du CO₂, de l'hydrogène, ou un gaz inerte, tel l'argon, l'azote, l'hélium, ou un mélange de plusieurs ces gaz actifs et/ou inertes. La composition du gaz est choisie notamment en fonction de la nature de la pièce à couper.

Le faisceau qui vient impacter la pièce va y fondre le métal qui sera expulsé en-dessous de la pièce par la pression du gaz d'assistance.

La Figure 1B permet de bien visualiser la section S1 de passage de l'orifice 24 de la buse 21 par rapport à la taille S2 de la tâche focale du faisceau 22. Comme on le voit, la section S1 est très supérieure à la taille S2 de la tâche focale du faisceau 22, ce qui engendre, avec les buses classiques, une consommation élevée de gaz d'assistance dont seulement une faible proportion va servir à expulser le métal fondu hors de la saignée de coupe 31.

Pour réduire considérablement la consommation de gaz ainsi que la pression nécessaire à la découpe, la présente invention propose une buse laser améliorée apte à et conçue pour couper avec un faisceau laser en mettant en oeuvre un débit de gaz et/ou une pression de gaz réduits grâce à une architecture de buse particulière permettant de forcer une proportion plus importante de gaz à rentrer dans la saignée 31 et à y expulser efficacement le métal fondu, et ce, quelle que soit la puissance laser ainsi et la longueur d'onde du faisceau.

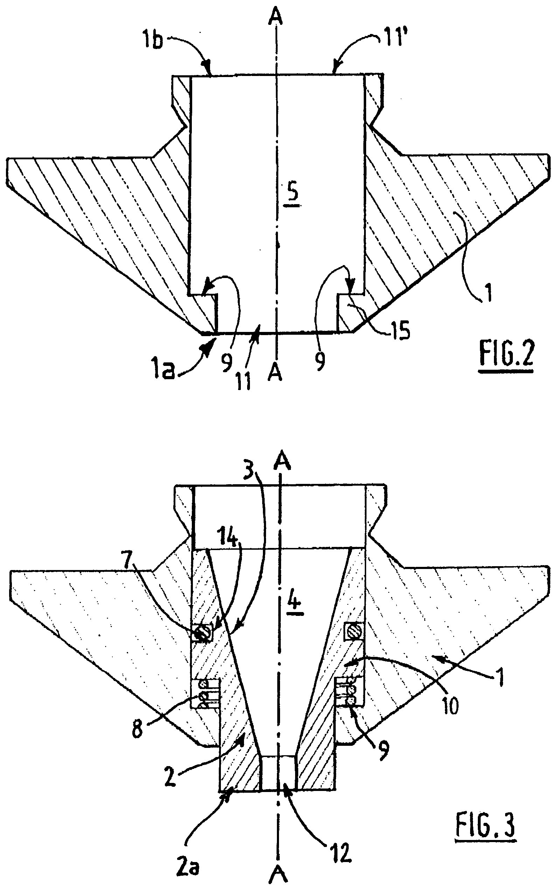

Selon l'invention, la buse laser comprend au moins deux composants essentiels, à savoir un corps 1 de buse coopérant avec un élément mobile 2 agencé et façon mobile à l'intérieur du corps 1 de la buse, dont un mode de réalisation est illustré en Figures 2 et 3. Plus précisément, comme visible en Figure 2, le corps 1 de buse qui est formé d'un matériau conducteur, par exemple du cuivre ou du laiton, est destiné à venir se fixer sur la tête de focalisation laser 20 de l'installation laser.

Avantageusement, le corps 1 de buse est une pièce de révolution et est traversé de part en part par un logement axial 5 d'axe AA qui s'étend depuis la face arrière 1b du corps 1 jusqu'à la face avant 1a dudit corps 1.

Le logement axial 5 débouche au niveau des deux faces avant 1a et arrière 1b du corps 1 de buse. La face arrière 1b porte donc un premier orifice d'entrée 11', alors que la face avant 1a porte un premier orifice de sortie 11 du corps de buse 1, les premiers orifices d'entrée 11' et de sortie 11 étant coaxiaux d'axe AA.

Ce logement axial 5 est en fait un évidement, par exemple de forme cylindrique comprenant un épaulement 9 interne se projetant radialement vers le centre du logement 5, ledit épaulement interne 9 étant formé par une restriction 15 de la section du logement axial 5 au niveau du premier orifice de sortie 11 située en face avant 1a du corps 1 de buse.

La buse de l'invention comprend par ailleurs un élément mobile 2 venant s'insérer dans le logement 5 du corps 1 de buse, comme visible en Figure 3. Cet élément mobile 2 est apte à et conçu pour se déplacer en translation selon l'axe AA à l'intérieur du logement 5 du corps 1 de buse.

Plus précisément, cet élément mobile 2 comprend une partie avant 2a formant une jupe 6, typiquement de forme cylindrique, c'est-à-dire tubulaire, agencée dans le logement axial 5 du corps de buse 1 et comprenant un passage axial 4 avec un deuxième orifice de sortie 12 débouchant au niveau de la partie avant 2 formant ladite jupe 6.

Pendant l'utilisation de la buse, le faisceau laser 22 et le gaz d'assistance 23 traversent le passage axial 4 de l'élément mobile 2 et ressortent par le deuxième orifice de sortie 12 débouchant au niveau de la partie avant 2 formant ladite jupe 6

L'élément mobile 2 est préférentiellement formé d'un matériau isolant, composite ou pas, par exemple polyétheréthercétone (Peek), Vespel ®, céramique ou pyrex, et reprend la géométrie interne d'une buse de coupage laser, c'est-à-dire qu'il peut avoir un profil interne, i. e le passage axial 4 peut avoir un profil, de forme conique, avec canal de sortie cylindrique non, tronconique, de type convergent/divergent (i.e. tuyère de Laval) ou toute autre géométrie adaptée.

L'élément mobile 2 est déplaçable axialement par rapport au corps 1 de la buse selon l'axe AA. En fait, l'élément mobile 2 se déplace sous l'effet de la pression du gaz d'assistance 23 qui vient s'exercer sur ledit élément mobile 2, ce qui tend à le pousser en direction de la pièce à couper 30.

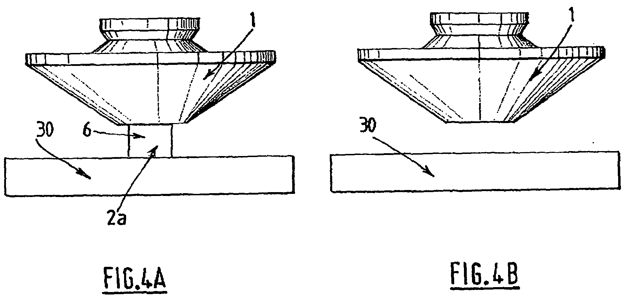

Le déplacement en translation selon l'axe AA de l'élément mobile 2 va provoquer le rapprochement de la jupe 6 de la surface supérieure 30 de la tôle à couper, qui vont venir en contact l'une de l'autre, comme illustré en Figure 4A.

Ainsi, le gaz va être canalisé par la jupe 6 et se trouver concentré au niveau de la tâche laser et donc de la saignée, ce qui va grandement améliorer son efficacité et l'expulsion du métal se fera mieux.

Un élément élastique 8, tel un ressort, est agencé dans le logement axial 5, entre le corps de buse 1 et l'élément mobile 2 de manière à exercer une force de rappel élastique sur l'élément mobile 2 dans un sens tendant à l'éloigner de la pièce à couper.

Ainsi, en fin de coupe, lorsque le gaz est coupé et que la pression gazeuse cesse de s'exercer sur l'élément mobile 2, celui-ci peut être rappelé dans sa position de repos et donc la jupe 6 rentrer à l'intérieur du logement 5, comme illustré en figure 4B.

De plus, l'élément élastique 8 permet de limiter la pression exercée par l'élément mobile 2 sur la pièce à couper lorsque celui-ci se déplace en direction de la pièce sous l'effet du gaz de coupe. Plus précisément, la force de rappel de l'élément élastique 8 est avantageusement dimensionnée de manière à maintenir l'élément mobile 2 au contact de la pièce à couper tout en limitant la pression que ledit élément exerce sur la tôle, pour minimiser grandement, voire éliminer, tout risque de déformation, de rayures ou d'entraînement de la tôle dans laquelle la pièce est découpée.

En outre, l'élément élastique 8 facilite les déplacements rapides de la tête de découpe à faible distance au-dessus de la tôle, sans gaz de coupe ni faisceau, puisque la pression gazeuse cesse alors de s'exercer sur l'élément mobile et la jupe 6 rentre à l'intérieur du logement 5.

De la sorte, il est possible de faire remonter la jupe uniquement, sans avoir nécessairement à relever la tête de focalisation supportant la buse de l'invention, ce qui facilité grandement la mise en oeuvre du procédé de coupage au plan industriel.

L'élément élastique 8 permet également de limiter le phénomène d'usure de la jupe 6 lors des phases de perçage de la tôle qui précèdent généralement les phases de découpe. En effet le perçage est le plus souvent opéré avec de faibles pressions de gaz, typiquement moins de 4 bar. L'élément élastique exerce alors une force de rappel suffisante pour que la jupe 6 remonte totalement ou quasi-totalement dans le logement 5 et soit ainsi protégée des projections de métal fondu générées par le perçage.

Il est à noter que la paroi périphérique externe de l'élément mobile 2 comprend une butée 10, de préférence une butée annulaire s'étendant sur tout ou partie de la périphérie dudit élément mobile 2, l'élément élastique 8 étant positionné entre l'épaulement 9 et la butée 10.

En fait, l'élément mobile 2 de la buse selon l'invention est donc apte à se déplacer entre plusieurs positions comprenant au moins:
- une position de repos dans laquelle la jupe 6 de la partie avant 2a est totalement ou quasi-totalement rentrée dans le logement axial 5 du corps de buse 1, comme illustré en Figure 4B, et
- une position de travail dans laquelle la jupe 6 de la partie avant 2a fait totalement ou quasi-totalement saillie à l'extérieur du logement axial 5 du corps de buse 1, au travers du premier orifice de sortie 11, et vient au contact de la pièce à couper, comme illustré en Figure 4A.

Bien entendu, l'élément mobile 2 peut occuper des positions intermédiaires dans lesquelles la jupe 6 ne fait que partiellement saillie à l'extérieur du logement axial 5 du corps de buse 1. Ces positions intermédiaires peuvent être notamment fonction de la pression exercée par le gaz sur l'élément mobile 2.

Optionnellement, au moins un élément d'étanchéité 7 est agencé entre le corps de buse 1 et l'élément mobile 2, en particulier un ou plusieurs joints toriques 7, ce qui permet d'assurer une étanchéité entre le corps de buse 1 et l'insert mobile 2.

Comme on le voit sur la Figure 3, la buse de l'invention est d'encombrement standard, c'est-à-dire que son encombrement n'est pas augmenté par rapport à une buse de coupe classique, ce qui est avantageux et compatible pour les découpes par imbrication, c'est-à-dire de pièces au sein d'une même tôle avec très peu d'écart entre les différentes pièces.

De plus, la buse de l'invention présente l'autre avantage d'être compatible avec les systèmes de capteur capacitif. En effet, la partie en cuivre ou autre matériau conducteur s'adapte a la hauteur spécifié par le capteur capacitif, comme une buse standard. C'est l'insert mobile 2 qui, sous la pression du gaz, vient en contact avec la tôle 30 à couper et permet ainsi de limiter les fuites de gaz.

La buse de l'invention comprend un élément mobile 2 dont le diamètre d'orifice de sortie 12 est compris entre 0.5 et 5 mm. De préférence, la partie avant 2a de l'élément mobile 2 a un diamètre externe compris entre 3 et 8 mm, de préférence encore de l'ordre de 6 mm.

### Exemples

Afin de montrer l'efficacité de la buse selon l'invention par rapport à une buse standard, et donc l'intérêt de forcer le gaz dans la saignée de coupe grâce à la mise en oeuvre d'une jupe montée sur un élément mobile, on réalisé des essais comparatifs en utilisant une installation de coupage avec générateur laser de type CO₂ pour généré un faisceau laser qui est amené à une tête de focalisation laser comprenant des optiques de focalisation, à savoir des lentilles.

La tête de focalisation laser est équipée, selon le cas, d'une buse standard avec orifice de sortie de 1,8 mm de diamètre ou d'une buse selon la Figure 3 avec jupe mobile cylindrique et canal de sortie cylindrique de 1,8 mm de diamètre.

Le gaz d'assistance utilisé est de l'azote.

La pièce coupée est une tôle d'acier inoxydable 304 L de 5 mm d'épaisseur.

Le faisceau laser a une puissance de 4 kW et la vitesse de coupe est de 2,6 m/min Les résultats obtenus ont montré que :
- avec la buse standard, une pression du gaz de 14 bar est insuffisante pour obtenir une coupe de qualité. En effet, à 14 bar, les bords de coupe comportent de nombreuses bavures adhérentes. Ceci démontre que l'évacuation du métal en fusion se fait mal du fait d'une action insuffisante du gaz sur le métal en fusion devant être expulsé. Afin d'éliminer ces bavures, une pression de 16 bar a été nécessaire.
- avec la buse de l'invention, des essais faits à des pressions s'échelonnant entre 1 et 5 bar ont conduit à des coupes de bonne qualité, c'est-à-dire à des bords de coupe dépourvus de bavures adhérentes. La jupe de la buse permet de canaliser le gaz dans la saignée et d'expulser efficacement le métal fondu.

Ces essais démontrent clairement l'efficacité d'une buse selon l'invention qui permet de réduire considérablement les pressions de gaz à mettre en oeuvre par rapport à une buse standard, toutes conditions étant égales par ailleurs, et donc de réduire également les consommations gazeuses.

## Revendications

1. Buse laser (1, 2) comprenant :
- un corps (1) de buse comprenant un logement axial (5) traversant axialement ledit corps de buse (1) et comprenant un premier orifice de sortie (11) situé au niveau de la face avant (1a) du corps de buse (1), et
- un élément mobile (2) comprenant une partie avant (2a) formant jupe, agencé dans le logement axial (5) du corps de buse (1), ledit élément mobile (2) étant mobile en translation dans le logement axial (5) du corps (1) de buse et comprenant un passage axial (4) avec un deuxième orifice de sortie (12) débouchant au niveau de la partie avant (2) formant jupe, **caractérisée en ce que** :
- l'élément mobile (2) est apte à se déplacer en translation dans le logement axial (5) en direction du premier orifice de sortie (11) sous l'effet d'une pression gazeuse s'exerçant sur l'élément mobile (2) jusqu'à ce que la partie avant (2a) formant jupe de l'élément mobile (2) vienne faire saillie à l'extérieur du logement axial (5) au travers du premier orifice de sortie (11) de la face avant (1a) du corps de buse (1), et
- un élément élastique (8) est agencé dans le logement axial (5), entre le corps de buse (1) et l'élément mobile (2), ledit élément élastique (8) exerçant une force de rappel élastique sur l'élément mobile (2) tendant à s'opposer au mouvement de translation dans le logement axial (5) en direction du premier orifice de sortie (11).

2. Buse selon la revendication précédente, **caractérisée en ce que** lorsque l'élément mobile (2) se déplace en translation dans le logement axial (5) en direction du premier orifice de sortie (11) situé au niveau de la face avant (1a) du corps de buse (1), la partie avant (2a) formant jupe de l'élément mobile (2) fait saillie à l'extérieur du logement axial (5) au travers du premier orifice de sortie (11) de la face avant (1a) du corps de buse (1).

3. Buse selon l'une des revendications précédentes, **caractérisée en ce que** le fond (15) du logement axial (5) du corps (1) de buse comprend un épaulement (9), et la paroi périphérique de l'élément mobile (2) comprend une butée (10), l'élément élastique (8) étant positionné entre l'épaulement (9) et la butée (10).

4. Buse selon l'une des revendications précédentes, **caractérisée en ce qu'**au moins un élément d'étanchéité (7) est agencé entre le corps de buse (1) et l'élément mobile (2).

5. Buse selon l'une des revendications précédentes, **caractérisée en ce que** ledit au moins un élément d'étanchéité (7) est agencé dans une gorge périphérique (14) aménagée dans la paroi périphérique externe de l'élément mobile (2).

6. Buse selon l'une des revendications précédentes, **caractérisée en ce que** l'élément mobile (2) est apte à se déplacer entre plusieurs positions comprenant :
- une position de repos dans laquelle la jupe de la partie avant (2a) est totalement ou quasi-totalement rentrée dans le logement axial (5) du corps de buse (1), et
- une position de travail dans laquelle la jupe de la partie avant (2a) fait totalement ou quasi-totalement saillie à l'extérieur du logement axial (5) du corps de buse (1), au travers du premier orifice de sortie (11).

7. Buse selon l'une des revendications précédentes, **caractérisée en ce que** le passage axial (4) de l'élément mobile (2) a un profil de forme conique, tronconique ou convergente/divergente.

8. Tête de focalisation laser comprenant au moins une optique de focalisation, **caractérisée en ce qu'**elle comporte en outre une buse laser selon l'une des revendications précédentes.

9. Installation laser comprenant un générateur laser, une tête de focalisation laser et un dispositif de convoyage de faisceau laser relié audit générateur laser et à ladite tête de focalisation laser, **caractérisée en ce que** la tête de focalisation laser est selon la revendication 8.

10. Installation selon la revendication 9, **caractérisée en ce que** le générateur laser est de type CO₂, YAG, à fibres ou à disques.

11. Procédé de coupage par faisceau laser, dans lequel on met en oeuvre une buse selon l'une des revendications 1 à 7, une tête de focalisation laser selon la revendication 8 ou une installation selon l'une des revendications 9 ou 10.

## Patentansprüche

1. Laserdüse (1, 2), die Folgendes umfasst:
- einen Düsenkörper (1), der eine axiale Aufnahme (5) umfasst, die den Düsenkörper (1) axial durchquert und eine erste Ausgangsöffnung (11) umfasst, die im Bereich der Vorderseite (1a) des Düsenkörpers (1) liegt, und
- ein mobiles Element (2), das ein Vorderteil (2a) umfasst, das eine Schürze bildet, die in der axialen Aufnahme (5) des Düsenkörpers (1) eingerichtet ist, wobei das mobile Element (2) in Verschiebung in der axialen Aufnahme (5) des Düsenkörpers (1) beweglich ist und eine axiale Passage (4) mit einer zweiten Ausgangsöffnung (12) umfasst, die im Bereich des mobilen Elements (2), das eine Schürze bildet, mündet, **dadurch gekennzeichnet, dass**:
- das mobile Element (2) geeignet ist, sich in Verschiebung in der axialen Aufnahme (5) in Richtung der ersten Ausgangsöffnung (11) unter der Einwirkung eines Gasdrucks zu bewegen, der auf das mobile Element (2) ausgeübt wird, bis das Vorderteil (2a), das eine Schürze des mobilen Elements (2) bildet, außerhalb der axialen Aufnahme (5) durch die erste Ausgangsöffnung (11) der Vorderseite (1a) des Düsenkörpers (1) vorsteht, und
- ein elastisches Element (8) in der axialen Aufnahme (5) zwischen dem Düsenkörper (1) und dem beweglichen Element (2) eingerichtet ist, wobei das elastische Element (8) eine elastische Rückstellkraft auf das mobile Element (2) ausübt, die sich der Verschiebungsbewegung in der axialen Aufnahme (5) in Richtung der ersten Ausgangsöffnung (11) widersetzt.

2. Düse nach dem vorhergehenden Anspruch, **dadurch gekennzeichnet, dass**, wenn sich das mobile Element (2) in Verschiebung in der axialen Aufnahme (5) in Richtung der ersten Ausgangsöffnung (11), die sich im Bereich der Vorderseite (1a) des Düsenkörpers (1) befindet, bewegt, das Vorderteil (2a), das die Schürze des beweglichen Elements (2) bildet, außerhalb der axialen Aufnahme (5) durch die erste Ausgangsöffnung (11) der Vorderseite (1a) des Düsenkörpers (1) vorsteht.

3. Düse nach einem der vorhergehenden Ansprüche, **dadurch gekennzeichnet, dass** der Grund (15) der axialen Aufnahme (5) des Düsenkörpers (1) einen Ansatz (9) umfasst, und die umfängliche Wand des mobilen Elements (2) einen Anschlag (10) umfasst, wobei das elastische Element (8) zwischen dem Ansatz (9) und dem Anschlag (10) positioniert ist.

4. Düse nach einem der vorhergehenden Ansprüche, **dadurch gekennzeichnet, dass** mindestens ein Abdichtelement (7) zwischen dem Düsenkörper (1) und dem mobilen Element (2) eingerichtet ist.

5. Düse nach einem der vorhergehenden Ansprüche, **dadurch gekennzeichnet, dass** das mindestens eine Abdichtelement (7) in einer umfänglichen Nut (14), die in der umfänglichen Außenwand des mobilen Elements (2) eingerichtet ist, eingerichtet ist.

6. Düse nach einem der vorhergehenden Ansprüche, **dadurch gekennzeichnet, dass** das mobile Element (2) angepasst ist, sich zwischen mehreren Positionen zu bewegen, die Folgendes umfassen:
- eine Ruheposition, in der die Schürze des Vorderteils (2a) vollständig oder fast vollständig in die axiale Aufnahme (5) des Düsenkörpers (1) eingefahren ist, und
- eine Arbeitsposition, in der die Schürze des Vorderteils (2a) vollständig oder fast vollständig außerhalb der axialen Aufnahme (5) des Düsenkörpers (1) durch die erste Ausgangsöffnung (11) vorsteht.

7. Düse nach einem der vorhergehenden Ansprüche, **dadurch gekennzeichnet, dass** die axiale Passage (4) des mobilen Elements (2) ein kegelförmiges, kegelstumpfförmiges oder konvergierend-divergierendes Profil hat.

8. Laserfokussierungskopf, der mindestens eine Fokussierungsoptik umfasst, **dadurch gekennzeichnet, dass** sie außerdem eine Laserdüse nach einem der vorhergehenden Ansprüche umfasst.

9. Laseranlage, die einen Lasergenerator, einen Laserfokussierungskopf und eine Laserstrahl-Beförderungsvorrichtung umfasst, die mit dem Lasergenerator und dem Laserfokussierungskopf verbunden ist, **dadurch gekennzeichnet, dass** der Laserfokussierungskopf Anspruch 8 entspricht.

10. Anlage nach Anspruch 9, **dadurch gekennzeichnet, dass** der Lasergenerator des Typs CO₂, YAG, mit Fasern oder Scheiben ist.

11. Laserstrahl-Schneidverfahren, bei dem eine Düse nach einem der Ansprüche 1 bis 7, ein Laserfokussierungskopf nach Anspruch 8 oder eine Anlage nach einem der Ansprüche 9 oder 10 umgesetzt werden.

## Claims

1. Laser nozzle (1, 2) comprising:
- a nozzle body (1) comprising an axial housing (5) passing axially through said nozzle body (1) and comprising a first outlet orifice (11) situated at the front face (1a) of the nozzle body (1), and
- a movable element (2) comprising a front part (2a) forming a skirt, arranged in the axial housing (5) of the nozzle body (1), said movable element (2) being capable of translational movement in the axial housing (5) of the nozzle body (1) and comprising an axial passage (4) with a second outlet orifice (12) emerging at the front part (2) forming a skirt, **characterised in that**:
- the movable element (2) is able to move translationally in the axial housing (5) in the direction of the first outlet orifice (11) under the effect of a gas pressure exerted on the movable element (2) until the front part (2a) forming a skirt of the movable element (2) comes to project outside the axial housing (5) through the first outlet orifice (11) in the front face (1a) of the nozzle body (1), and
- an elastic element (8) is arranged in the axial housing (5), between the nozzle body (1) and the movable element (2), said elastic element (8) exerting an elastic return force on the movable element (2) tending to oppose the translational movement in the axial housing (5) in the direction of the first outlet orifice (11).

2. Nozzle according to the previous claim, **characterised in that** when the movable element (2) moves translationally in the axial housing (5) in the direction of the first outlet orifice (11) situated at the front face (1a) of the nozzle body (1), the front part (2a) forming a skirt of the movable element (2) projects outside the axial housing (5) through the first outlet orifice (11) in the front face (1a) of the nozzle body (1).

3. Nozzle according to one of the previous claims, **characterised in that** the bottom (15) of the axial housing (5) of the nozzle body (1) comprises a shoulder (9), and the peripheral wall of the movable element (2) comprises a stop (10), the elastic element (8) being positioned between the shoulder (9) and the stop (10).

4. Nozzle according to one of the previous claims, **characterised in that** at least one sealing element (7) is arranged between the nozzle body (1) and the movable element (2).

5. Nozzle according to one of the previous claims, **characterised in that** said at least one sealing element (7) is arranged in a peripheral groove (14) provided in the external peripheral wall of the movable element (2).

6. Nozzle according to one of the previous claims, **characterised in that** the movable element (2) is able to move between several positions including:
- an idle position in which the skirt of the front part (2a) is completely or almost completely retracted in the axial housing (5) of the nozzle body (1), and
- a working position in which the skirt of the front part (2a) projects completely or almost completely outside the axial housing (5) of the nozzle body (1), through the first outlet orifice (11).

7. Nozzle according to one of the previous claims, **characterised in that** the axial passage (4) of the movable element (2) has a profile with a conical, frustoconical or convergent/divergent shape.

8. Laser focusing head comprising at least one focusing optic, **characterised in that** it further comprises a laser nozzle according to one of the previous claims.

9. Laser installation comprising a laser generator, a laser focusing head and a laser beam conveying device connected to said laser generator and to said laser focusing head, **characterised in that** the laser focusing head is in accordance with claim 8.

10. Installation according to claim 9, **characterised in that** the laser generator is of the CO₂, YAG, fibre or disc type.

11. Method for cutting by laser beam, wherein a nozzle according to one of claims 1 to 7, a laser focusing head according to claim 8, or an installation according to one of claims 9 or 10 is used.
